# EUROPEAN PATENT APPLICATION

(11) **EP 4 843 850 A1**
(43) Date of publication of application: **25.11.2026**
(21) Application number: 25177678.7
(22) Date of filing: 20.05.2025
(51) Int. Cl.: B60W 10/06, B60W 10/10, B60W 30/18, B60W 50/00, F02D 41/08

(54) **METHOD OF CONTROLLING OPERATION OF A VEHICLE, COMPUTER PROGRAM, COMPUTER-READABLE MEDIUM, CONTROL ARRANGEMENT, AND VEHICLE**

(71) Applicant: Scania CV AB, 151 87 Södertälje (SE)
(72) Inventor: STÅHL, Daniel, 749 48 Enköping (SE); VESTGÖTE, Karl, 611 63 Nyköping (SE); ALENIUS, Mikael, 141 72 Segeltorp (SE); KILSAND, Erik, 132 44 Saltsjö-Boo (SE); BERGLUND, Martin, 619 73 Vagnhärad (SE); DELLRUD, Jan, 646 32 Gnesta (SE)
(74) Representative: Scania CV AB

(57) **Abstract**

A method (100) of controlling operation of a vehicle (2) is disclosed, wherein the vehicle (2) comprises an internal combustion engine (5), one or more auxiliary systems (8), and a transmission arrangement (10) controllable to a disengaged state, in which the transmission arrangement (10) disconnects the engine (5) from driven wheels (27) of the vehicle (2). The method (100) comprises obtaining (110) a power demand of the one or more auxiliary systems (8) of the vehicle (2), and during a freewheeling operation of the vehicle (2) in which the transmission arrangement (10) is in the disengaged state, operating (120) the engine (5) at a reduced idle speed, lower than a nominal idle speed of the engine (5), in response to the obtained power demand being below a threshold demand. The present disclosure further relates to a computer program, a computer-readable medium (200), a control arrangement (21), and a vehicle (2).

## Description

### TECHNICAL FIELD

The present disclosure relates to a method of controlling operation of a vehicle. The present disclosure further relates to a computer program, a computer-readable medium, a control arrangement configured to control operation of a vehicle, as well as a vehicle comprising a control arrangement.

### BACKGROUND

Vehicles commonly comprise an internal combustion engine arranged to generate propulsion torque, one or more auxiliary systems, and a transmission arrangement arranged between the engine and the driven wheels of the vehicle. The transmission arrangement can be controllable to a disengaged state, in which the engine is disconnected from the driven wheels. This can enable fuel-saving functions, such as freewheeling or engine stop during coasting.

The internal combustion engine can be configured to operate on various types of fuels. Conventional fuels include petrol and diesel, but there is an increasing use of renewable alternatives such as biodiesel, biogas, ethanol, and hydrogen. These renewable fuels can reduce the climate impact associated with vehicle operation. However, even when using renewable fuels, there is a general problem in the field of improving fuel efficiency. Reduced fuel consumption can lead to lower operating costs, extended driving range, and reduced environmental impact related to fuel production, distribution, and use.

Vehicles typically comprise one or more auxiliary systems arranged to perform functions related to engine cooling, power generation, climate control, braking, and steering assistance. Examples of such systems include alternators, air compressors, hydraulic pumps, and cooling fans. These auxiliary systems may be mechanically or electrically driven, and they can influence engine load and fuel consumption depending on when and how they are operated.

The transmission arrangement of some vehicles comprises an automated manual gearbox and a clutch. The automated manual gearbox can be arranged to provide a number of selectable gear ratios between the engine and the driven wheels, and may be controllable to a neutral state in which the torque transmission path is interrupted. The clutch may be controllable between a closed state, in which engine torque is transmitted, and an open state, in which the engine is disconnected from the transmission. By placing the gearbox in neutral and/or opening the clutch, the transmission arrangement can be controlled to a disengaged state, enabling the vehicle to coast freely. Freewheeling may reduce engine drag and allow the vehicle to maintain speed with lower energy losses.

A state in which the engine runs without transmitting torque to the wheels is commonly referred to as idling. During idling, the engine operates at a relatively low speed, known as idle speed or nominal idle speed. This speed is typically set to ensure stable combustion and sufficient power to run necessary auxiliary systems, such as those mentioned above. Idling may occur when the vehicle is stationary, or when propulsion is not needed. Although idling can be useful in some situations, it results in fuel consumption without contributing to vehicle movement.

One known way of reducing fuel consumption in coasting situations is to shut off the engine when propulsion is not required. This can eliminate idling losses during phases where the vehicle maintains speed through momentum. However, such engine-off strategies may present drawbacks. For instance, shutting off the engine can affect the availability or stability of one or more auxiliary systems, particularly those that rely on engine-driven components. Additionally, restarting the engine may require the use of an electric starter motor, which can introduce wear, electrical load variations, and delays in response. These drawbacks may limit the applicability of engine-off strategies in certain driving conditions or vehicle types.

Moreover, the operation of auxiliary systems during varying driving conditions can introduce further challenges. The power demand from such systems may change depending on factors such as vehicle speed, ambient conditions, or driving environment. If the engine is operating under low-load conditions or disconnected from the driven wheels, the power available to auxiliary systems may be limited.

There is therefore a general problem in the field of vehicle control concerning how to reduce fuel consumption while still ensuring reliable operation of auxiliary systems under a wide range of driving conditions.

### SUMMARY

It is an object of the present invention to overcome, or at least alleviate, at least some of the above-mentioned problems and drawbacks. The object is achieved by the subject-matter of the appended independent claim(s).

According to a first aspect of the present disclosure, the object is achieved by a method of controlling operation of a vehicle, wherein the method is performed by a control arrangement, and wherein the vehicle comprises an internal combustion engine, one or more auxiliary systems, and a transmission arrangement controllable to a disengaged state, in which the transmission arrangement disconnects the engine from driven wheels of the vehicle. The method comprises:
- obtaining a power demand of the one or more auxiliary systems of the vehicle, and during a freewheeling operation of the vehicle in which the transmission arrangement is in the disengaged state:
- operating the engine at a reduced idle speed, lower than a nominal idle speed of the engine, in response to the obtained power demand being below a threshold demand.

Thereby, a method is provided capable of lowering the fuel consumption of the vehicle, while ensuring functionality of the one or more auxiliary systems. This is because by operating the engine at the reduced idle speed, lower than the nominal idle speed, the fuel consumption of the vehicle can be reduced. Moreover, by operating the engine at the reduced idle speed in response to the obtained power demand being below a threshold demand, the functionality of the one or more auxiliary systems can be ensured.

By ensuring functionality of the one or more auxiliary systems, the operational safety can be ensured because the one or more auxiliary systems may comprise one or more safety critical auxiliary systems, such as one or more systems for controlling brake pressure, steering assistance, and/or vehicle stability.

In addition, a method is provided that enables the engine to operate at the reduced idle speed more frequently and in a wider range of driving situations, since the method enables idle speed reduction while maintaining the functionality of the one or more auxiliary systems. Accordingly, a method is provided capable of reducing fuel consumption over a driving cycle, while maintaining the functionality of the one or more auxiliary systems.

Accordingly, a method is provided overcoming, or at least alleviating, at least some of the above-mentioned problems and drawbacks. As a result, the above-mentioned object is achieved.

Optionally, the method comprises:
- increasing the idle speed of the engine from the reduced idle speed in response to the obtained power demand exceeding the threshold demand.

Thereby, a method is provided capable of ensuring functionality of the one or more auxiliary systems in cases where the obtained power demand rises above the threshold demand. In this manner, the operational safety of the vehicle can be maintained. In addition, by increasing the idle speed of the engine from the reduced idle speed in response to the obtained power demand exceeding the threshold demand, a method is provided that enables the engine to operate at the reduced idle speed even more frequently and in a wider range of driving situations, since the method enables idle speed reduction while ensuring that the functionality of the one or more auxiliary systems is maintained. Thus, a method is provided capable of further reducing fuel consumption over a driving cycle, while maintaining the functionality of the one or more auxiliary systems.

Optionally, the method comprises:
- controlling the idle speed of the engine gradually or incrementally based on the magnitude of the obtained power demand.

Thereby, a method is provided that can avoid excessive increases in idle speed by adapting it in a gradual or incremental manner based on the power demand. In other words, this can ensure the functionality of the one or more auxiliary systems while avoiding control actions that may lead to unnecessary fuel consumption.

Optionally, the step of obtaining the power demand comprises:
- monitoring a current power demand of the one or more auxiliary systems.

Thereby, the power demand can be obtained in a precise and accurate manner so as to allow for a consistent and accurate control of the idle speed of the engine.

Optionally, the step of obtaining the power demand comprises:
- estimating the power demand of the one or more auxiliary systems based on at least one of a speed of the vehicle, a steering angle of the vehicle, and an axle load of the vehicle.

Thereby, the power demand can be estimated in an accurate manner based on vehicle-related parameters that reflect the current driving conditions, which may enable timely and appropriate adjustment of the engine idle speed to ensure functionality of the one or more auxiliary systems while reducing unnecessary fuel consumption.

Optionally, the method comprises:
- estimating an upcoming power demand of the one or more auxiliary systems, and
- increasing the idle speed of the engine from the reduced idle speed in response to the estimated upcoming power demand exceeding a threshold demand, such that the increase is performed prior to occurrence of the corresponding power demand.

Thereby, the engine idle speed can be increased in a predictive manner, reducing the risk of delayed response to auxiliary system demands. This may enable stable operation of the one or more auxiliary systems while still allowing the engine to operate at the reduced idle speed when no increase in demand is expected, in order to lower the fuel consumption of the vehicle.

Optionally, the step of estimating the upcoming power demand comprises, when the vehicle is travelling on a road:
- obtaining driving environment data representative of the driving environment of an upcoming road segment of the road, and
- estimating the upcoming power demand of the one or more auxiliary systems based on the obtained driving environment data.

Thereby, the upcoming power demand of the one or more auxiliary systems can be estimated based on conditions expected to occur along the road ahead. This may allow the idle speed of the engine to be adjusted in advance of changes in the driving environment, such as curvatures, inclines, or traffic patterns, thereby enabling stable auxiliary system operation while maintaining fuel-efficient engine control.

Optionally, the driving environment data is representative of at least one of an inclination of the upcoming road segment and a curvature of the upcoming road segment. Thereby, the estimation of upcoming power demand can reflect changes in driving conditions that may affect the load on the one or more auxiliary systems, enabling more accurate and timely adjustment of the engine idle speed. As a further result, a method is provided that can improve the balance between auxiliary system functionality and fuel-efficient engine operation in anticipation of varying road conditions.

Optionally, the one or more auxiliary systems comprises at least one of an air conditioning compressor, a power steering system, an electrical system, and a coolant pump. Thereby, the method may account for at least one auxiliary system with a specific type of power demand, such as a mechanical load from a belt-driven compressor or coolant pump, or an electrical load from components like lighting or control units. This can enable the engine idle speed to be adjusted in a manner that maintains the functionality of the at least one auxiliary system under varying operating conditions, without unnecessarily increasing fuel consumption.

Optionally, the vehicle comprises a brake control device, and wherein the freewheeling operation is performed while the brake control device is in an unactuated state. Thereby, the freewheeling operation can be performed under conditions where braking is not required, allowing the vehicle to coast efficiently and reduce fuel consumption without compromising functionality of the one or more auxiliary systems.

According to a second aspect of the present disclosure, the object is achieved by a computer program comprising instructions which, when the program is executed by a computer of a control arrangement, cause the computer to carry out the method according to the first aspect of the present disclosure. Since the computer program comprises instructions to cause the control arrangement to carry out the method according to the first aspect of the present disclosure, a computer program is provided which provides conditions for overcoming, or at least alleviating, at least some of the above-mentioned drawbacks. As a result, the above-mentioned object is achieved.

According to a third aspect of the present disclosure, the object is achieved by a computer-readable medium comprising instructions which, when executed by a computer of a control arrangement, cause the computer to carry out the method according to the first aspect of the present disclosure. Since the computer-readable medium comprises instructions to cause the control arrangement to carry out the method according to the first aspect of the present disclosure, a computer-readable medium is provided which provides conditions for overcoming, or at least alleviating, at least some of the above-mentioned drawbacks. As a result, the above-mentioned object is achieved.

According to a fourth aspect of the present disclosure, the object is achieved by a control arrangement configured to control operation of a vehicle, the vehicle comprising an internal combustion engine, one or more auxiliary systems, and a transmission arrangement controllable to a disengaged state, in which the transmission arrangement disconnects the engine from driven wheels of the vehicle. The control arrangement is configured to:
- obtain a power demand of the one or more auxiliary systems of the vehicle, and during a freewheeling operation of the vehicle in which the transmission arrangement is in the disengaged state:
- operate the engine at a reduced idle speed, lower than a nominal idle speed of the engine, in response to the obtained power demand being below a threshold demand.

Thereby, a control arrangement is provided capable of lowering the fuel consumption of the vehicle, while ensuring functionality of the one or more auxiliary systems. This is because by operating the engine at the reduced idle speed, lower than the nominal idle speed, the fuel consumption of the vehicle can be reduced. Moreover, by operating the engine at the reduced idle speed in response to the obtained power demand being below a threshold demand, the functionality of the one or more auxiliary systems can be ensured.

By ensuring functionality of the one or more auxiliary systems, the operational safety can be ensured because the one or more auxiliary systems may comprise one or more safety critical auxiliary systems, such as one or more systems for controlling brake pressure, steering assistance, and/or vehicle stability.

In addition, a control arrangement is provided that enables the engine to operate at the reduced idle speed more frequently and in a wider range of driving situations, since the control arrangement enables idle speed reduction while maintaining the functionality of the one or more auxiliary systems. Thus, a control arrangement is provided capable of reducing fuel consumption over a driving cycle, while maintaining the functionality of the one or more auxiliary systems.

Accordingly, a control arrangement is provided overcoming, or at least alleviating, at least some of the above-mentioned problems and drawbacks. As a result, the above-mentioned object is achieved.

It will be appreciated that the various embodiments described for the method are all combinable with the control arrangement as described herein. That is, the control arrangement according to the fourth aspect of the invention may be configured to perform any one of the method steps of the method according to the first aspect of the invention.

According to a fifth aspect of the present disclosure, the object is achieved by a vehicle comprising an internal combustion engine, one or more auxiliary systems, a transmission arrangement controllable to a disengaged state, in which the transmission arrangement disconnects the engine from driven wheels of the vehicle, and a control arrangement according to the fourth aspect of the present disclosure.

Thereby, a vehicle is provided having conditions for a reduced fuel consumption, while ensuring functionality of the one or more auxiliary systems. This is because by operating the engine at the reduced idle speed, lower than the nominal idle speed, the fuel consumption of the vehicle can be reduced. Moreover, by operating the engine at the reduced idle speed in response to the obtained power demand being below a threshold demand, the functionality of the one or more auxiliary systems can be ensured.

By ensuring functionality of the one or more auxiliary systems, the operational safety can be ensured because the one or more auxiliary systems may comprise one or more safety critical auxiliary systems, such as one or more systems for controlling brake pressure, steering assistance, and/or vehicle stability.

In addition, a vehicle is provided with conditions for operating the engine at the reduced idle speed more frequently and in a wider range of driving situations, as the control performed by the control arrangement enables idle speed reduction while maintaining the functionality of the one or more auxiliary systems. Thus, a vehicle is provided having conditions for a reduced fuel consumption over a driving cycle, while the functionality of the one or more auxiliary systems is maintained.

Accordingly, a vehicle is provided overcoming, or at least alleviating, at least some of the above-mentioned problems and drawbacks. As a result, the above-mentioned object is achieved.

Optionally, the transmission arrangement comprises at least one of:
- an automated manual gearbox, wherein the transmission arrangement is controllable to the disengaged state by placing the automated manual gearbox in a neutral state, and
- a clutch, wherein the transmission arrangement is controllable to the disengaged state by opening the clutch.

Thereby, the transmission arrangement can be brought to the disengaged state in a technically straightforward manner to disconnect the engine from driven wheel of the vehicle and provide low frictional resistance during freewheeling operations of the vehicle.

Optionally, the vehicle is a heavy road vehicle, such as a truck or a bus. Thereby, a heavy road vehicle is provided having at least some of the above-mentioned advantages.

Further features of, and advantages with, the present invention will become apparent when studying the appended claims and the following detailed description.

### BRIEF DESCRIPTION OF THE DRAWINGS

Various aspects of the present disclosure, including its particular features and advantages, will be readily understood from the example embodiments discussed in the following detailed description and the accompanying drawings, in which:
Fig. 1 schematically illustrates a vehicle according to some embodiments,
Fig. 2 schematically illustrates a drivetrain of the vehicle illustrated in Fig. 1,
Fig. 3 illustrates the vehicle illustrated in Fig. 1 as travelling on a first example road,
Fig. 4 schematically illustrates a top-view of the vehicle illustrated in Fig. 1 and Fig. 3, as positioned on a second example road,
Fig. 5 schematically illustrates a method of controlling operation of a vehicle, and
Fig. 6 illustrates a computer-readable medium.

### DETAILED DESCRIPTION

Aspects of the present disclosure will now be described more fully. Like reference signs refer to like elements throughout. Well-known functions or constructions will not necessarily be described in detail for brevity and/or clarity.

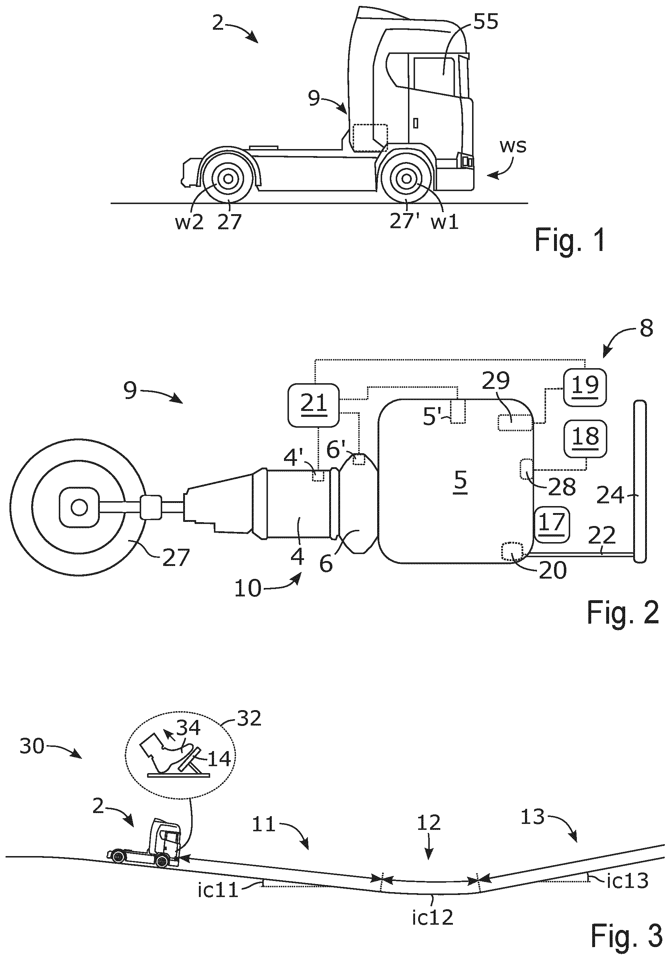

Fig. 1 schematically illustrates a vehicle 2 according to some embodiments. According to the illustrated embodiments, the vehicle 2 is a truck, i.e., a type of heavy road vehicle, as well as a type of heavy commercial vehicle. According to further embodiments, the vehicle 2, as referred to herein, may be another type of heavy or lighter type of manned or unmanned vehicle for land-based propulsion such as a lorry, a bus, a construction vehicle, a tractor, a car, or the like.

The vehicle 2 comprises a drivetrain 9. The drivetrain 9 is configured to provide motive power to the vehicle 2 via driven wheels 27 of the vehicle 2. As indicated in Fig. 1, the vehicle 2 comprises wheel brakes w1, w2 controllable to brake the vehicle 2. The wheel brakes w1, w2 are comprised in a wheel brake system ws of the vehicle 2 and are controllable to brake the vehicle 2 by braking rotation of the wheels 27', 27 of the vehicle 2. The wheel brakes w1, w2 may comprise friction brake arrangements, such as drum brakes, disc brakes, or a combination thereof. Drum brakes normally comprise a cylinder-shaped part called a brake drum and a set of shoes or pads controllable to be pressed against the cylinder-shaped part to create friction therebetween for braking rotation of the wheels. Disc brakes normally comprise a disc and a set of pads controllable to be pressed against the disc to create friction therebetween for braking rotation of the wheels 27', 27.

In Fig. 1, a driver environment 55 of the vehicle 2 is indicated. The term "driver environment 55" refers to the area within the vehicle 2 where a driver operates and controls the vehicle 2. The driver environment 55 typically includes the driver's seat, steering wheel, pedals, dashboard, and other control interfaces and displays that the driver may use to manage the functions of the vehicle 2.

Fig. 2 schematically illustrates the drivetrain 9 of the vehicle 2 illustrated in Fig. 1. Below, simultaneous reference is made to Fig. 1 and Fig. 2, if not indicated otherwise.

The drivetrain 9 of the vehicle 2 comprises a transmission arrangement 10 and an internal combustion engine 5. As is further explained herein, the internal combustion engine 5 is configured to provide motive power to the vehicle 2 via the transmission arrangement 10 and the driven wheels 27 of the vehicle 2. The driven wheels 27 of the vehicle 2 are also schematically indicated in Fig. 2.

According to the illustrated embodiments, the vehicle 2 comprises two driven wheels 27 which constitute rear-wheels of the vehicle 2. The vehicle 2 further comprises two non-driven wheels 27', which according to the illustrated embodiments constitute front-wheels of the vehicle 2. However, according to further embodiments, the vehicle 2 may comprise another configuration of driven and non-driven wheels.

The internal combustion engine 5 is in some places herein simply referred to as the "engine 5" for reasons of brevity and clarity. Therefore, throughout this disclosure, the wording "engine 5" may be replaced by the wording "internal combustion engine 5". In Fig. 2, a fuel supply system 5' of the engine 5 is indicated. The fuel supply system 5' is configured to supply fuel to combustion chambers of the engine 5, wherein each combustion chamber is delimited by a cylinder and a piston of the engine 5.

The internal combustion engine 5 may be a diesel engine, i.e. a type of compression ignition engine. The internal combustion engine 5 may thus be configured to operate on diesel or a diesel-like fuel, such as biodiesel, biomass to liquid (BTL), or gas to liquid (GTL) diesel. Diesel-like fuels, such as biodiesel, can be obtained from renewable sources such as vegetable oil which mainly comprises fatty acid methyl esters (FAME). Diesel-like fuels can be produced from many types of oils, such as rapeseed oil (rapeseed methyl ester, RME) and soybean oil (soy methyl ester, SME).

According to further embodiments, the internal combustion engine 5 may be an Otto engine with a spark-ignition device, wherein the Otto engine is configured to run on petrol, alcohol, a gaseous fuel, or combinations thereof. Alcohol, such as ethanol, can be derived from renewable biomass.

The gaseous fuel may also be referred to as fuel gas and may encompass any type of fuel that under ordinary ambient temperature and pressure conditions are gaseous and which can be stored at pressure in a pressure tank and can be combusted in an internal combustion engine to produce useful work. Examples of such gaseous fuels are compressed natural gas (CNG), liquified natural gas (LNG), Liquefied Petroleum Gas (LPG), Hydrogen (H2), Biogas, and Syngas. Many gaseous fuels can be derived from renewable sources, such as from renewable biomass. According to some embodiments, the engine 5 may be a dual fuel engine configured to operate using two different fuels, such as a gaseous fuel and a liquid fuel. According to embodiments herein, the internal combustion engine 5 may be a four-stroke internal combustion engine.

According to the illustrated embodiments, the vehicle 2 comprises the internal combustion engine 5 as the only means of providing motive power to the vehicle 2. However, according to further embodiments, the vehicle 2 may be a so called hybrid electric vehicle comprising one or more electric propulsion machines, in addition to the internal combustion engine 5, for providing motive power to the vehicle 2.

The vehicle 2 comprises one or more auxiliary systems 8. According to the embodiments illustrated in Fig. 2, the one or more auxiliary systems 8 comprises an air conditioning compressor 17, a power steering system 18, an electrical system 19, and a coolant pump 20. Each of these auxiliary systems 17, 18, 19, 20 is powered by the operation of the engine 5 and thereby depends on rotation of the engine 5 to function.

The air conditioning compressor 17 is configured to compress a refrigerant medium for circulation in a closed-loop air conditioning circuit arranged to provide cooling to the driver environment 55. By circulating the refrigerant and causing it to change pressure and temperature, the air conditioning circuit can lower the temperature of the air supplied to the interior of the vehicle 2.

The power steering system 18 is, according to the illustrated embodiments, hydraulically powered via a hydraulic pump 28 driven by the engine 5. The hydraulic pump 28 is arranged to supply pressurised hydraulic fluid to steering components to reduce the steering effort required by the driver. According to further embodiments, the power steering system 18 may be electrically powered, for instance via an electric motor, instead of or in addition to the hydraulic configuration.

The electrical system 19 is powered by an electric generator 29 mechanically driven by the engine 5. The electric generator 29 may comprise an alternator or other type of rotating electrical machine configured to convert mechanical power from the engine 5 into electrical power. The electrical system 19 may be configured to distribute the generated electrical power to various vehicle subsystems, such as lighting, instrumentation, control units, and comfort functions.

The coolant pump 20 is configured to circulate a coolant medium through a cooling system 22 of the engine 5. The coolant medium may comprise, for example, a mixture of water and glycol. The cooling system 22 comprises a radiator 24 through which the coolant flows to release thermal energy to the surrounding air. Thereby, the coolant pump 20 contributes to maintaining a suitable operating temperature of the engine 5 by enabling heat transfer away from components of the engine 5.

Each of the auxiliary systems 17, 18, 19, 20 as described above depends on the rotation of the engine 5 for their operation. As such, when the engine 5 is not rotating, the ability to operate one or more of these auxiliary systems may be reduced or eliminated.

As is further explained herein, the transmission arrangement 10 is controllable to a disengaged state, in which the transmission arrangement 10 disconnects the engine 5 from driven wheels 27 of the vehicle 2. In more detail, according to the illustrated embodiments, the transmission arrangement 10 comprises an automated manual gearbox 4. According to the illustrated embodiments, the automated manual gearbox 4 is an unsynchronized automated manual transmission, usually abbreviated AMT. An automated manual gearbox 4 combines the efficiency of a manual transmission with the convenience of an automatic transmission. Contrary to traditional automatic transmissions that employ torque converters and planetary gearsets, an automated manual gearbox 4 features a gearbox with a gear layout, and a mechanical gear engagement and disengagement process, similar to that of a manual transmission.

The automated manual gearbox 4 may be controllable between at least two different gears to provide at least two different transmission ratios between the engine 5 and the driven wheels 27 of the vehicle 2. The at least two different transmission ratios may also be referred to as at least two different gear steps or at least two different gear ratios. The automated manual gearbox 4, as referred to herein, may also be referred to as a gearbox. A transmission ratio between the engine 5 and the driven wheels 27 of the vehicle 2, as referred to herein, may be equated with a transmission ratio between an output shaft of the engine 5 and the driven wheels 27 of the vehicle 2. The output shaft of the engine 5 may be operably connected to, or form part of, a crankshaft of the engine 5.

Moreover, according to the illustrated embodiments, the transmission arrangement 10 of the vehicle 2 comprises a clutch 6 arranged between the engine 5 and the automated manual gearbox 4. The clutch 6 is controllable between an open state, in which the clutch disengages an input shaft of the automated manual gearbox 4 from the output shaft of the engine 5, and a closed state, in which the clutch 6 connects the input shaft of the automated manual gearbox 4 to the output shaft of the engine 5. In other words, the clutch 6 is configured to transfer torque between the engine 5 and the input shaft of the automated manual gearbox 4 when in the closed state, and is configured to cancel the transfer of torque between the engine 5 and the input shaft of the automated manual gearbox 4 when in the open state.

The transmission arrangement 10 further comprises a clutch actuator 6' controllable to execute clutch movements of the clutch 6, i.e., controllable to transfer the clutch 6 between the open and closed states. The clutch actuator 6' may for example comprise a hydraulic, pneumatic, or electric actuator. Moreover, the transmission arrangement 10 comprises a gear shifting actuator 4' controllable to execute gear shifts in the automated manual gearbox 4. The gear shifting actuator 4' may comprise a hydraulic, pneumatic, or electric actuator configured to execute gear shifts in the automated manual gearbox 4 by moving gear shifting linkages of the automated manual gearbox 4.

As mentioned, the transmission arrangement 10 is controllable to a disengaged state in which the transmission arrangement 10 disconnects the engine 5 from driven wheels 27 of the vehicle 2. According to the illustrated embodiments, the transmission arrangement 10 is controllable to the disengaged state by either opening the clutch 6 or by placing the automated manual gearbox 4 in a neutral state.

The vehicle 2 comprises a control arrangement 21. As is further explained herein, the control arrangement 21 is configured to control operation of the vehicle 2. According to the embodiments illustrated in Fig. 2, the control arrangement 21 is operably connected to the gear shifting actuator 4', the clutch actuator 6', the fuel supply system 5' of the engine 5, and the electrical system 19. According to further embodiments, the control arrangement 21 may be operably connected to one or more further or alternative components of the engine 5 and the transmission arrangement 10, such as for example one or more sensors arranged to monitor engine speed, load, or temperature, or actuators configured to control valve timing, exhaust gas recirculation, turbocharger operation, or an air inlet throttle of the engine 5. The control arrangement 21 may further be operably connected to components for controlling auxiliary systems 8, such as a relay for the electric generator 29, a control unit for the power steering system 18, or a control valve associated with the coolant pump 20

Fig. 3 illustrates the vehicle 2 illustrated in Fig. 1 as travelling on a road 30. The road 30 depicted in Fig. 3 may also be referred to as a first example road. Below, simultaneous reference is made to Fig. 1 - Fig. 3, if not indicated otherwise.

According to embodiments herein, the control arrangement 21 is configured to obtain a power demand of the one or more auxiliary systems 8 of the vehicle 2. The control arrangement 21 may be configured to obtain the power demand in various ways, including monitoring, estimating, and/or measuring the power demand, as is further explained in detail below.

In Fig. 3, the vehicle 2 is illustrated as performing a freewheeling operation upon descending a downhill slope 11. The transmission arrangement 10 is in the disengaged state during the freewheeling operation of the vehicle 2. In other words, in the situation depicted in Fig. 3, the control arrangement 21 has controlled the transmission arrangement 10 to the disengaged state either by opening the clutch 6 or by placing the automated manual gearbox 4 in a neutral state using the above explained actuators 4', 6'.

As schematically depicted in Fig. 3, the vehicle 2 comprises a brake control device 14 in the form of a brake pedal. According to further embodiments, the vehicle 2 may comprise another type of brake control device 14, such as a lever, or the like. In the schematic representation of the vehicle 2 of Fig. 3, the brake control device 14 is illustrated inside a dashed ellipse 32. However, as indicated with the line connecting the dashed ellipse 32 to the vehicle 2, the brake control device 14 is arranged inside the driver environment 55 of the vehicle 2. The driver environment 55 of the vehicle 2 is indicated in Fig. 1.

Moreover, as indicated in Fig. 3, the brake control device 14 is configured to be actuated, i.e., pressed, by a foot 34 of a driver of the vehicle 2. The wheel brake system ws of the vehicle 2, indicated in Fig. 1, is configured to brake the vehicle 2 by braking rotation of the wheels 27', 27 of the vehicle 2 upon actuation of the brake control device 14. In Fig. 3, the brake control device 14 is illustrated in an unactuated state, as the foot 34 of the driver is shown as having been released from the brake control device 14. The wheel brake system ws is configured not to brake the vehicle 2 when the brake control device 14 is in the unactuated state.

According to embodiments herein, the freewheeling operation is performed while the brake control device 14 is in an unactuated state. The control arrangement 21 is configured to, during a freewheeling operation of the vehicle 2, in which the transmission arrangement 10 is in the disengaged state, operate the engine 5 at a reduced idle speed, lower than a nominal idle speed of the engine 5, in response to the obtained power demand being below a threshold demand.

In this manner, the control arrangement 21 can reduce fuel consumption while ensuring functioning of the one or more auxiliary systems 8 as is further explained herein. The nominal idle speed, as referred to herein, may denote a predefined engine speed at which the engine 5 is configured to operate when idling under nominal conditions. The nominal idle speed may, for example, be within the range of 500 to 600 revolutions per minute (rpm), although other values may be used depending on engine type and configuration. The nominal idle speed may be selected to ensure stable engine operation.

The reduced idle speed, being lower than the nominal idle speed of the engine 5, may denote a lower engine speed selected to reduce fuel consumption during idling. In some embodiments, the reduced idle speed may be at least 30 or 40 rpm lower than the nominal idle speed. According to some embodiments, the nominal idle speed may be set to approximately 500 rpm, and the reduced idle speed may then be at least 30 rpm lower or around 50 rpm lower, for example set to 470 rpm or approximately 450 rpm. In other embodiments, the nominal idle speed may be set to approximately 540 rpm, and the reduced idle speed may then be at least 40 rpm lower or around 80 rpm lower, for example set to 500 rpm or approximately 460 rpm.

The idle speed of the engine 5, including both the nominal and reduced idle speeds, may be controlled by the control arrangement 21. In the illustrated embodiments, the control arrangement 21 may be configured to control the idle speed by controlling the fuel supply system 5', an air inlet throttle of the engine 5, or another actuator arranged to influence the engine speed.

According to some embodiments, the control arrangement 21 is configured to increase the idle speed of the engine 5 from the reduced idle speed in response to the obtained power demand exceeding the threshold demand. The control arrangement 21 may be configured to control the idle speed of the engine 5 gradually or incrementally based on the magnitude of the obtained power demand.

The gradual control of the idle speed of the engine 5 may be performed such that it matches the obtained power demand, i.e., such that functioning of the one or more auxiliary systems 8 can be ensured while avoiding excessive revving of the engine 5. The incremental control of the idle speed of the engine 5 may be performed such that it avoids prolonged operation at resonance frequencies within the engine 5, the drivetrain 9, or other components of the vehicle 2. Thereby, vibrations and noise associated with such frequencies can be mitigated, which may improve driver comfort and reduce wear on mechanical parts of the vehicle 2.

The feature that the control arrangement 21 is configured to increase the idle speed of the engine 5 from the reduced idle speed does not necessarily mean that the idle speed is increased to the nominal idle speed. According to some embodiments, the resulting idle speed may remain below the nominal idle speed, or exceed the nominal idle speed, depending on the magnitude of the obtained or estimated power demand of the one or more auxiliary systems 8. Thereby, the idle speed may be adapted more precisely to the prevailing operating conditions, which may enable a balance between fuel-efficient engine operation and reliable functionality of the one or more auxiliary systems 8.

According to some embodiments, the control arrangement 21 is configured to obtain the power demand by monitoring a current power demand of the one or more auxiliary systems 8. The monitoring may be performed based on sensor signals indicative of operating conditions of the auxiliary systems 8. For example, the control arrangement 21 may receive signals indicative of a fluid pressure and/or flow in the hydraulic power steering system 18, a coolant flow rate or temperature in the cooling system 22, an electrical load on the electric generator 29, and/or an activation state of the air conditioning compressor 17. Based on such sensor signals, the control arrangement 21 may determine the current power demand and adjust the idle speed of the engine 5 accordingly.

As an alternative, or in addition, the control arrangement 21 may be configured to obtain the power demand by estimating the power demand of the one or more auxiliary systems 8 based on at least one of a speed of the vehicle 2, a steering angle of the vehicle 2, and an axle load of the vehicle 2. For example, an increased steering angle may indicate that a turning manoeuvre is being performed, during which the power demand of the power steering system 18 may increase. Similarly, an increased axle load may suggest that the vehicle 2 is operating under loaded conditions, which may result in higher thermal loads on the engine 5 and thus a higher power demand of the coolant pump 20. Likewise, a higher vehicle speed may coincide with higher thermal loads on the engine 5 and thus a higher power demand of the coolant pump 20. By evaluating one or more of these parameters, the control arrangement 21 may estimate a current or upcoming power demand of the auxiliary systems 8 and adapt the idle speed of the engine 5 accordingly.

As is further explained below, according to some embodiments, the control arrangement 21 is configured to estimate an upcoming power demand of the one or more auxiliary systems 8, and increase the idle speed of the engine 5 from the reduced idle speed in response to the estimated upcoming power demand exceeding a threshold demand, such that the increase is performed prior to occurrence of the corresponding power demand.

According to the illustrated embodiments, the control arrangement 21 is configured to, when the vehicle 2 is travelling on a road 30, estimate the upcoming power demand of the one or more auxiliary systems 8 by obtaining driving environment data representative of the driving environment of an upcoming road segment 13 of the road 30, and estimate the upcoming power demand of the one or more auxiliary systems 8 based on the obtained driving environment data.

The driving environment data may be representative of at least one of an inclination ic11, ic12, ic3 of an upcoming road segment 11, 12, 13 and a curvature of the upcoming road segment 11, 12, 13. The control arrangement 21 may be configured to obtain the driving environment data from map data containing information about the road 30, such as one or more of the above mentioned examples of information about the road 30. The map data may be stored in an onboard system of the vehicle 2 and/or may be received from an external sender. The onboard system may for example be an onboard navigation system.

The vehicle 2 may comprise a vehicle positioning device configured to provide a current position estimate of the vehicle 2. Such a vehicle positioning device may for example utilize a space-based satellite navigation system such as a Global Positioning System (GPS), The Russian GLObal NAvigation Satellite System (GLONASS), European Union Galileo positioning system, Chinese Compass navigation system, or Indian Regional Navigational Satellite System.

The control arrangement 21 may be configured to, when the vehicle 2 is travelling on a road 30, obtain the driving environment data representative of the driving environment of an upcoming road segment 13 of the road 30 by comparing the current position estimate of the vehicle 2 and the map data.

As an alternative, or in addition, the control arrangement 21 may be configured to, when the vehicle 2 is travelling on a road 30, obtain the driving environment data based on data from an onboard sensor assembly, wherein the onboard sensor assembly is configured to monitor a driving environment in front of the vehicle 2. Such a sensor assembly may comprise one or more of an image capturing device, such as a camera, a LiDAR (Light Detection and Ranging) sensor, and a radar (Radio Detection and Ranging) sensor. Moreover, in some embodiments, the control arrangement 21 may be configured to obtain the driving environment data from an external sender, such as an external sender arranged on a surrounding vehicle or an external sender of a roadside installation.

An image capturing device works by capturing visual data in the form of images or videos. This allows the control arrangement 21 to identify and interpret various aspects of the driving environment in front of the vehicle 2, such as elevation of the upcoming road segment 13 of the road 30 and a curvature of the upcoming road segment 13. LiDAR sensors function by emitting pulsed laser light and measuring the time it takes for the light to bounce back after hitting an object. This data can be used to create accurate, three-dimensional information about the surrounding environment, including surrounding vehicles and several types of the above mentioned driving environment data. Radar sensors emits radio waves that bounce off the surface of the road and other objects, such as surrounding vehicles. By analysing the reflected signals, several types of the above mentioned driving environment data can be obtained.

In the example depicted in Fig. 3, the vehicle 2 is illustrated as positioned at a distance from an upcoming uphill slope of an upcoming road segment 13. The control arrangement 21 may be configured to identify the upcoming uphill slope in the upcoming road segment 13 by analysing inclination data contained in the above mentioned driving environment data.

The control arrangement 21 may be configured to estimate the upcoming power demand of the one or more auxiliary systems 8 based on the obtained driving environment data representative of the inclination ic13 of the upcoming road segment 13. In the illustrated example, the relatively large inclination ic13 of the upcoming road segment 13 may indicate that the engine 5 will experience an increased thermal load upon travelling the road segment 13. The control arrangement 21 may therefore estimate that a cooling demand will arise, and in response, control the idle speed of the engine 5 such that operation of the coolant pump 20 is ensured during or prior to the upcoming road segment 13. In other words, the control arrangement 21 may increase idle speed of the engine 5 from the reduced idle speed in response to the estimated upcoming power demand exceeding a threshold demand, such that the increase is performed prior to occurrence of the corresponding power demand.

The expression prior to as used herein may refer to a short time interval before the demand arises, such as a few seconds, or to a short distance before the vehicle 2 reaches the relevant road segment, such as a few tens of metres. In this example, by initiating the increase in idle speed in advance, the functionality of the coolant pump 20 can be ensured at the onset of the cooling demand, thereby avoiding delayed response or loss of auxiliary system functionality.

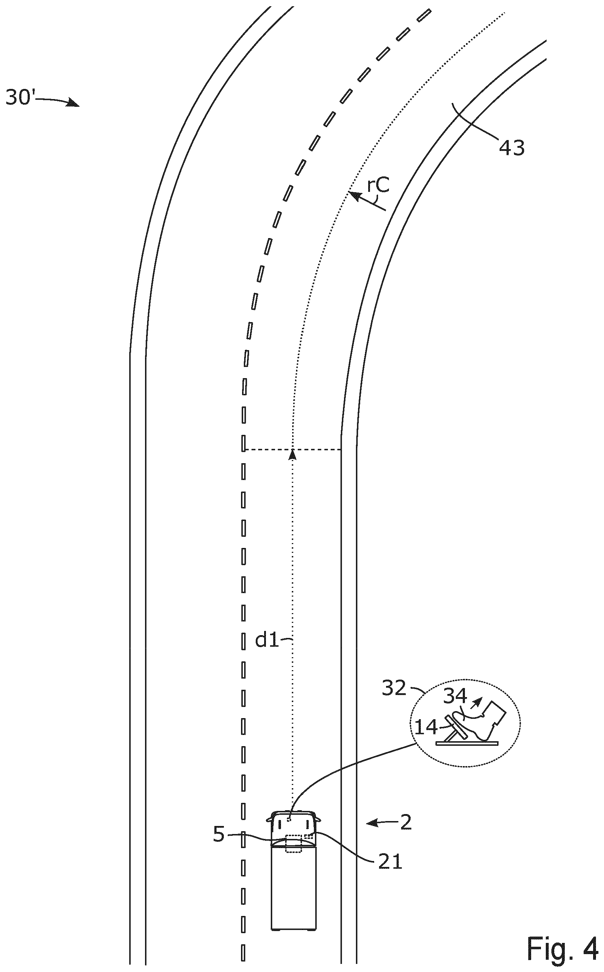

**Fig. 4** schematically illustrates a top-view of the vehicle 2 illustrated in Fig. 1 and Fig. 3, as positioned on a second example road 30'. Below, simultaneous reference is made to Fig. 1 - Fig. 4, if not indicated otherwise.

Also in the situation depicted in Fig. 4, the vehicle 2 is performing a freewheeling operation, as indicated by the released brake control device 14, as explained with reference to Fig. 3. The vehicle 2 is depicted as located at a distance d1 from an upcoming road segment 43, wherein the upcoming road segment 43 comprises a curve with a curvature rC. The curvature rC of the upcoming road section 43 may also be referred to as a radius of curvature.

As mentioned, according to the illustrated embodiments, the control arrangement 21 is configured to, when the vehicle 2 is travelling on a road 30', estimate the upcoming power demand of the one or more auxiliary systems 8 by obtaining driving environment data representative of the driving environment of an upcoming road segment 43 of the road 30', and estimate the upcoming power demand of the one or more auxiliary systems 8 based on the obtained driving environment data. Moreover, as mentioned, the driving environment data may comprise a curvature rC of an upcoming road section 43.

The control arrangement 21 may thus be configured to estimate that an increased power demand of the one or more auxiliary systems 8 will occur upon entering the upcoming curved road segment 43, based on the obtained curvature rC. For example, the control arrangement 21 may determine that the power steering system 18 will require additional power during the turning manoeuvre. In response to the estimated upcoming power demand exceeding a threshold demand, the control arrangement 21 may increase the idle speed of the engine 5 from the reduced idle speed prior to the vehicle 2 reaching the curved road segment 43. Thereby, operation of the power steering system 18 can be ensured during the turning manoeuvre, which may improve drivability and steering responsiveness.

The threshold demand, as referred to herein, may represent a predetermined or dynamically set level of power demand above which the control arrangement 21 is configured to adjust the idle speed of the engine 5. The threshold may be set based on calibration data, empirical measurements, or predefined safety margins to ensure reliable operation of the one or more auxiliary systems 8. According to some embodiments, the threshold may be defined individually for different auxiliary systems, such as the power steering system 18, the coolant pump 20, the air conditioning compressor 17, or the electrical system 19. For example, a lower threshold may be set for systems requiring continuous operation, such as the coolant pump 20, while a higher threshold may be set for systems with intermittent or non-critical operation, such as the air conditioning compressor 17. The threshold may also be adapted based on vehicle operating conditions, such as ambient temperature, vehicle speed, vehicle load, or driving mode, to optimise both fuel efficiency and system functionality.

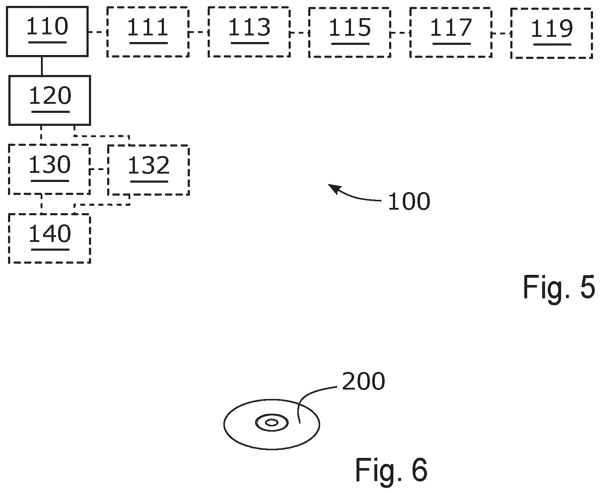

Fig. 5 schematically illustrates a method 100 of controlling operation of a vehicle. The vehicle may be a vehicle 2 as explained with reference to Fig. 1 - Fig. 4. Therefore, below, simultaneous reference is made to Fig. 1 - Fig. 5, if not indicated otherwise.

The method 100 is a method of controlling operation of a vehicle 2, wherein the method 100 is performed by a control arrangement 21, and wherein the vehicle 2 comprises an internal combustion engine 5, one or more auxiliary systems 8, and a transmission arrangement 10 controllable to a disengaged state, in which the transmission arrangement 10 disconnects the engine 5 from driven wheels 27 of the vehicle 2. The method 100 comprises:
- obtaining 110 a power demand of the one or more auxiliary systems 8 of the vehicle 2, and
during a freewheeling operation of the vehicle 2 in which the transmission arrangement 10 is in the disengaged state:
- operating 120 the engine 5 at a reduced idle speed, lower than a nominal idle speed of the engine 5, in response to the obtained power demand being below a threshold demand.

As indicated in Fig. 5, the method 100 may comprise the step of:
- increasing 132 the idle speed of the engine 5 from the reduced idle speed in response to the obtained power demand exceeding the threshold demand.

Moreover, the method 100 may comprise:
- controlling 140 the idle speed of the engine 5 gradually or incrementally based on the magnitude of the obtained power demand.

According to some embodiments, the step of obtaining 110 the power demand comprises:
- monitoring 117 a current power demand of the one or more auxiliary systems 8.

As an alternative, or in addition, the step of obtaining 110 the power demand may comprise:
- estimating 119 the power demand of the one or more auxiliary systems 8 based on at least one of a speed of the vehicle 2, a steering angle of the vehicle 2, and an axle load of the vehicle 2.

According to some embodiments, the method 100 comprises:
- estimating 111 an upcoming power demand of the one or more auxiliary systems 8, and
- increasing 130 the idle speed of the engine 5 from the reduced idle speed in response to the estimated upcoming power demand exceeding a threshold demand, such that the increase is performed prior to occurrence of the corresponding power demand.

Moreover, according to some embodiments, the step of estimating 111 the upcoming power demand comprises, when the vehicle 2 is travelling on a road 30, 30':
- obtaining 113 driving environment data representative of the driving environment of an upcoming road segment 13, 43 of the road 30, 30', and
- estimating 115 the upcoming power demand of the one or more auxiliary systems 8 based on the obtained driving environment data.

It will be appreciated that the various embodiments described for the method 100 are all combinable with the control arrangement 21 as described herein. That is, the control arrangement 21 may be configured to perform any one of the method steps 110, 111, 113, 115, 117, 119, 120, 130, 132, and 140 of the method 100.

**Fig.** 6 illustrates a computer-readable medium 200 comprising instructions which, when executed by a computer, cause the computer to carry out the method 100 according to some embodiments of the present disclosure. According to some embodiments, the computer-readable medium 200 comprises a computer program comprising instructions which, when the program is executed by a computer, cause the computer to carry out the method 100 according to some embodiments. The computer may be comprised in the control arrangement 21.

One skilled in the art will appreciate that the method 100 of controlling operation of a vehicle 2 may be implemented by programmed instructions. These programmed instructions are typically constituted by a computer program, which, when it is executed in the control arrangement 21, ensures that the control arrangement 21 carries out the desired control, such as the method steps 110, 111, 113, 115, 117, 119, 120, 130, 132, and 140 described herein. The computer program is usually part of a computer program product which comprises a suitable digital storage medium on which the computer program is stored, such as the computer-readable medium 200 illustrated in Fig. 6. In other words, the computer program product may be a computer readable medium 200 and the computer program may be stored in the computer readable medium 200.

The control arrangement 21 may comprise a computer which may take the form of substantially any suitable type of hardware or hardware/firmware device implemented using processing circuity such as, but not limited to, a processor, Central Processing Unit (CPU), a controller, an arithmetic logic unit (ALU), a digital signal processor, an Application Specific Integrated Circuit (ASIC), a circuit for digital signal processing (digital signal processor, DSP), a microcomputer, a field programmable gate array (FPGA), a System-on-Chip (SoC), a programmable logic unit, a microprocessor, an application-specific integrated circuit, or any other device capable of electronically performing operations in a defined manner, or other processing logic that may interpret and execute instructions. The herein utilised expression "computer" may represent a processing circuitry comprising a plurality of processing circuits, such as, e.g., any, some or all of the ones mentioned above.

The control arrangement 21 may further comprise a memory unit, wherein the computer may be connected to the memory unit, which may provide the computer with, for example, stored program code and/or stored data which the computer may need to enable it to do calculations. The computer may also be adapted to store partial or final results of calculations in the memory unit. The memory unit may comprise a physical device utilised to store data or programs, i.e., sequences of instructions, on a temporary or permanent basis. According to some embodiments, the memory unit may comprise integrated circuits comprising silicon-based transistors. The memory unit may comprise e.g. a memory card, a flash memory, a USB memory, a hard disc, or another similar volatile or non-volatile storage unit for storing data such as e.g. ROM (Read-Only Memory), PROM (Programmable Read-Only Memory), EPROM (Erasable PROM), EEPROM (Electrically Erasable PROM), etc. in different embodiments.

The control arrangement 21 is connected to components of the vehicle 2 for receiving and/or sending input and output signals. These input and output signals may comprise waveforms, pulses, or other attributes which the input signal receiving devices can detect as information and which can be converted to signals processable by the control arrangement 21. These signals may then be supplied to the computer. One or more output signal sending devices may be arranged to convert calculation results from the computer to output signals for conveying to other parts of the vehicle's control system and/or the component or components for which the signals are intended. Each of the connections to the respective components of the vehicle 2 for receiving and sending input and output signals may take the form of one or more from among a cable, a data bus, e.g. a CAN (controller area network) bus, a MOST (media orientated systems transport) bus or some other bus configuration, or a wireless connection.

In the embodiments illustrated, the vehicle 2 comprises a control arrangement 21 but might alternatively be implemented wholly or partly in two or more control arrangements, two or more control arrangements, or two or more control units.

Control systems in modern vehicles generally comprise a communication bus system consisting of one or more communication buses for connecting a number of electronic control units (ECUs), or controllers, to various components on board the vehicle. Such a control system may comprise a large number of control units and taking care of a specific function may be shared between two or more of them. Vehicles and engines of the type here concerned are therefore often provided with significantly more control arrangements than depicted in Fig. 2 and Fig. 4, as one skilled in the art will surely appreciate.

The computer-readable medium 200 may be provided for instance in the form of a data carrier carrying computer program code for performing at least some of the method steps 110, 111, 113, 115, 117, 119, 120, 130, 132, and 140 according to some embodiments of the method 100 when being loaded into one or more computers of the control arrangement 21.

The data carrier may be, e.g. a CD ROM disc, as is illustrated in Fig. 6, or a ROM (read-only memory), a PROM (programable read-only memory), an EPROM (erasable PROM), a flash memory, an EEPROM (electrically erasable PROM), a hard disc, a memory stick, an optical storage device, a magnetic storage device or any other appropriate medium such as a disk or tape that may hold machine readable data in a non-transitory manner. Accordingly, in some embodiments, the computer-readable medium 200 may be a non-transitory computer-readable medium, such as a tangible electronic, magnetic, optical, infrared, electromagnetic, and/or semiconductor system, apparatus, and/or device. The computer-readable medium 200 may furthermore be provided as computer program code on a server and may be downloaded to the control arrangement 21 remotely, e.g., over an Internet or an intranet connection, or via other wired or wireless communication systems.

It is to be understood that the foregoing is illustrative of various example embodiments and that the invention is defined only by the appended independent claims. A person skilled in the art will realize that the example embodiments may be modified, and that different features of the example embodiments may be combined to create embodiments other than those described herein, without departing from the scope of the present invention, as defined by the appended independent claims.

As used herein, the term "comprising" or "comprises" is open-ended, and includes one or more stated features, elements, steps, components, or functions but does not preclude the presence or addition of one or more other features, elements, steps, components, functions, or groups thereof.

## Claims

1. A method (100) of controlling operation of a vehicle (2), wherein the method (100) is performed by a control arrangement (21), the vehicle (2) comprising:
- an internal combustion engine (5),
- one or more auxiliary systems (8), and
- a transmission arrangement (10) controllable to a disengaged state, in which the transmission arrangement (10) disconnects the engine (5) from driven wheels (27) of the vehicle (2),
wherein the method (100) comprises:
- obtaining (110) a power demand of the one or more auxiliary systems (8) of the vehicle (2), and
during a freewheeling operation of the vehicle (2) in which the transmission arrangement (10) is in the disengaged state:
- operating (120) the engine (5) at a reduced idle speed, lower than a nominal idle speed of the engine (5), in response to the obtained power demand being below a threshold demand.

2. The method (100) according to claim 1, wherein the method (100) comprises:
- increasing (132) the idle speed of the engine (5) from the reduced idle speed in response to the obtained power demand exceeding the threshold demand.

3. The method (100) according to claim 1 or 2, wherein the method (100) comprises:
- controlling (140) the idle speed of the engine (5) gradually or incrementally based on the magnitude of the obtained power demand.

4. The method (100) according to any one of the preceding claims, wherein the step of obtaining (110) the power demand comprises:
- monitoring (117) a current power demand of the one or more auxiliary systems (8).

5. The method (100) according to any one of the preceding claims, wherein the step of obtaining (110) the power demand comprises:
- estimating (119) the power demand of the one or more auxiliary systems (8) based on at least one of a speed of the vehicle (2), a steering angle of the vehicle (2), and an axle load of the vehicle (2).

6. The method (100) according to any one of the preceding claims, wherein the method (100) comprises:
- estimating (111) an upcoming power demand of the one or more auxiliary systems (8), and
- increasing (130) the idle speed of the engine (5) from the reduced idle speed in response to the estimated upcoming power demand exceeding a threshold demand, such that the increase is performed prior to occurrence of the corresponding power demand.

7. The method (100) according to claim 6, wherein the step of estimating (111) the upcoming power demand comprises, when the vehicle (2) is travelling on a road (30, 30'):
- obtaining (113) driving environment data representative of the driving environment of an upcoming road segment (13, 43) of the road (30, 30'), and
- estimating (115) the upcoming power demand of the one or more auxiliary systems (8) based on the obtained driving environment data.

8. The method (100) according to claim 7, wherein the driving environment data is representative of at least one of an inclination (ic13) of the upcoming road segment (13) and a curvature (rC) of the upcoming road segment (43).

9. The method (100) according to any one of the preceding claims, wherein the one or more auxiliary systems (8) comprises at least one of an air conditioning compressor (17), a power steering system (18), an electrical system (19), and a coolant pump (20).

10. The method (100) according to any one of the preceding claims, wherein the vehicle (2) comprises a brake control device (14), and wherein the freewheeling operation is performed while the brake control device (14) is in an unactuated state.

11. A computer program comprising instructions which, when the program is executed by a computer of a control arrangement (21), cause the computer to carry out the method (100) according to any one of the claims 1 - 10.

12. A computer-readable medium (200) comprising instructions which, when executed by a computer of a control arrangement (21), cause the computer to carry out the method (100) according to any one of the claims 1 - 10.

13. A control arrangement (21) configured to control operation of a vehicle (2), the vehicle (2) comprising:
- an internal combustion engine (5),
- one or more auxiliary systems (8), and
- a transmission arrangement (10) controllable to a disengaged state, in which the transmission arrangement (10) disconnects the engine (5) from driven wheels (27) of the vehicle (2),
wherein the control arrangement (21) is configured to:
- obtain a power demand of the one or more auxiliary systems (8) of the vehicle (2), and during a freewheeling operation of the vehicle (2) in which the transmission arrangement (10) is in the disengaged state:
- operate the engine (5) at a reduced idle speed, lower than a nominal idle speed of the engine (5), in response to the obtained power demand being below a threshold demand.

14. A vehicle (2) comprising:
- an internal combustion engine (5),
- one or more auxiliary systems (8),
- a transmission arrangement (10) controllable to a disengaged state, in which the transmission arrangement (10) disconnects the engine (5) from driven wheels (27) of the vehicle (2), and
- a control arrangement (21) according to claim 13.

15. The vehicle (2) according to claim 14, wherein the transmission arrangement (10) comprises at least one of:
- an automated manual gearbox (4), wherein the transmission arrangement (10) is controllable to the disengaged state by placing the automated manual gearbox (4) in a neutral state, and
- a clutch (6), wherein the transmission arrangement (10) is controllable to the disengaged state by opening the clutch (6).

16. The vehicle (2) according to claim 14 or 15, wherein the vehicle (2) is a heavy road vehicle, such as a truck or a bus.
